# EUROPÄISCHE PATENTSCHRIFT

(11) **EP 0 508 976 B1**
(45) Veröffentlichungstag und Bekanntmachung des Hinweises auf die Patenterteilung: **09.10.1996**
(21) Anmeldenummer: 92890059.6
(22) Anmeldetag: 17.03.1992
(51) Int. Cl.: F16D 23/06

(54) **Synchronisierungseinrichtung**
Synchronizing device
Synchronisateur

(30) Priorität: 10.04.1991 AT 753/91
(43) Veröffentlichungstag der Anmeldung: 14.10.1992
(73) Patentinhaber: HOERBIGER GmbH, 86956 Schongau (DE)
(72) Erfinder: Soffa, Franz, W-8927 Burggen (DE)
(74) Vertreter: Klein, Adam, Dipl.Ing.

(56) Entgegenhaltungen:
- EP-A- 0 080 265
- EP-A- 0 292 468
- AT-A- 385 826
- DE-A- 3 735 978

## Beschreibung

Die Erfindung bezieht sich auf eine Synchronisierungseinrichtung für Schaltgetriebe, insbesondere von Kraftfahrzeugen, mit einem auf einer Getriebewelle drehfest angeordneten Synchronkörper mit einer Schiebemuffe und wenigstens einem diesem zugeordneten, auf der Getriebewelle drehbar gelagerten Gangrad, das mittels der Schiebemuffe mit dem Synchronkörper drehfest zusammenschaltbar ist und mit dem ein Kupplungskörper formschlüssig verbunden ist, der mit dem Synchronkörper über einen Synchronring, der mit einer konischen Kupplungsfläche versehen ist, durch eine ein- und ausrückbare Reibungskupplung in Verbindung steht, die einen Reibringskörper mit einer konischen Reibfläche aufweist, wobei der Reibringkörper mit Mitnahmenocken versehen ist, die in Ausnehmungen des Kupplungskörpers eingreifen.

Eine Synchronisierungseinrichtung dieser Art ist aus der DE-A-3735978 bekannt. Die dort zwischen dem auf einer Getriebewelle drehfest angeordneten Synchronkörper und den zu beiden Seiten desselben vorgesehenen Gangräder angeordneten Reibungskupplungen bestehen jedoch je aus mehreren Einzelteilen und sind entsprechend kompliziert. Jede Reibungskupplung hat zwei konische Reibringkörper, einen Trennkonus und einen Doppelkonus, von denen der eine über entsprechende Klauen mit dem Synchronkörper und der andere mit einem mit dem Gangrad drehfest verbundenen Kupplungsrad in Verbindung steht. Das Kupplungsrad weist über und unter den beiden Reibringkörpern je eine konische Reibfläche auf, von denen die eine mit Friktionsmaterial versehen ist, wogegen der Doppelkonus auf seinen beiden Seiten einen als Friktionsmaterial dienenden Papierüberzug trägt. Beim Einrücken dieser Reibungskupplungen werden der Trennkonus und der Doppelkonus zwischen den konischen Reibflächen des Synchronkörpers einerseits und des zugehörigen Kupplungsrades anderseits eingeklemmt und abgestützt, so daß sie lediglich zur Übertragung von Reibungskräften, aber nicht zur selbständigen Übertragung von mechanischen Kräften dienen.

Die GB-PS 1,073,410 beschreibt eine andere Bauart, bei der die konische Kupplungsfläche des Synchronringes mit einem Reibbelag versehen ist, z.B. mit einer Molybdänschicht oder einer anderen aufgesprühten, nicht eisenhältigen Reibschicht, und der mit dem Gangrad verbundene Kupplungskörper einen axial vorragenden Ringfortsatz mit einer konischen Kupplungsfläche aufweist, die mit dem Reibbelag des Synchronringes zusammenwirkt. Derartige Synchronisierungseinrichtungen können jedoch in der Praxis nicht immer befriedigen, weil es schwierig und teuer ist, einen Reibbelag mit geeigneten Reibeigenschaften auf eine der beiden zusammenwirkenden konischen kupplungsflächen aufzubringen. Außerdem ist die bekannte Ausführung selbst verhältnismäßig aufwendig in der Herstellung, weil der mit dem Gangrad verbundene Kupplungskörper einen entsprechend massiven Ringfortsatz mit der zweiten konischen Kupplungsfläche aufweisen muß, wodurch der Kupplungskörper eine verhältnismäßig komplizierte Form erhält.

In der letzten Zeit hat sich ergeben, daß Synchronisierungseinrichtungen mit Reibflächen, die einen Streusinter-Reibbelag aufweisen, für die Praxis am besten geeignet sind und auch verhältnismäßig einfach hergestellt werden können. Die einzige Schwierigkeit besteht dabei darin, den Streusinter-Reibbelag auf eine konische Kupplungsfläche aufzubringen und sicher auf dieser zu befestigen. Bekanntlich können Sinterpulver nur auf ebene Flächen aufgestreut und aufgesintert werden.

Aus der DE-PS 34 17 813 ist eine Synchronisierungseinrichtung bekannt, bei der die konische Kupplungsfläche des Synchronringes mit einem Streusinter-Reibbelag versehen ist, der auf ein ebenes, verhältnismäßig dünnes Trägerblech aufgesintert ist, welches anschließend in die Form der konischen Kupplungsfläche gebracht und auf dieser befestigt, z.B. aufgelötet oder aufgeschweißt ist. Mit dieser bekannten Ausführung können vorteilhafte Reibeigenschaften der Synchronisierungskupplung erzielt werden, die Herstellung des Synchronringes mit Streusinter-Reibbelages ist jedoch noch immer verhältnismäßig aufwendig.

Eine einfachere Möglichkeit, einen Streusinter-Reibbelag für Synchronisierungskupplungen, Bremsen u.dgl. zu erhalten, ist in der AT-PS 385 826 vorbeschrieben. Dort sind die Reibbeläge auf wenigstens eine zylindrische oder konische Reibfläche des Reibringkörpers selbst unmittelbar aufgesintert. Die Verwendung eines Trägerbleches für den Streusinter-Reibbelag entfällt dabei. Der den Reibbelag oder auch zwei Reibbeläge tragende Reibringkörper bildet einen eigenen Bauteil. Bei der Herstellung des Reibringkörpers wird so vorgegangen, daß zunächst ein ebener Ringkörper hergestellt und auf diesen der Streusinter-Reibbelag aufgebracht und aufgesintert wird, worauf der streubesinterte Reibringkörper durch Prägen, Tiefziehen u.dgl. so umgeformt wird, daß die streubesinterten Reibflächen zylindrisch oder konisch sind.

Dieser bekannte Reibringkörper ist vor allem für die sogenannte Doppelsynchronisation geeignet, die für größere Beanspruchungen, z.B. in den unteren Gängen von kraftfahrzeug-Wechselgetrieben, in Lastwagengetrieben oder in hoch beanspruchten Schaltgetrieben anderer Arbeitsmaschinen angewendet wird. Der Reibringkörper weist dabei sowohl an seiner Außen- als auch an seiner Innenseite streubesinterte Reibflächen auf, die je mit einer konischen Kupplungsfläche des Synchron- und Innenringes zusammenwirken. Durch diese Doppelsynchronisierung wird der Synchronisierungsvorgang beschleunigt und das Schalten der Gänge erleichtert. Als nachteilig kann dabei lediglich angesprochen werden, daß zwei Reibflächen mit Reibbelägen und zwei damit zusammenwirkende Kupplungsflächen erforderlich sind, was den Bauaufwand für die Synchronisierung entsprechend vergrößert.

Der Erfindung liegt die Aufgabe zugrunde, eine weniger aufwendige Synchronisierungseinrichtung anzugeben, bei der mit einer einzigen Reibfläche und einer einzigen zugehörigen Kupplungsfläche das Auslangen gefunden werden kann.

Mit der Erfindung wird diese Aufgabe bei einer Synchronisierungseinrichtung der eingangs angeführten Bauart dadurch gelöst, daß je Reibungskupplung nur ein einziger Reibringkörper vorgesehen ist, der einen eigenständigen, selbsttragenden Bauteil bildet, nur an seiner konischen Außenfläche mit einem aufgesinterten Reibbelag versehen ist und über diesen unmittelbar mit der konischen Kupplungsfläche des Synchronringes zusammenwirkt. Die erfindungsgemäße Synchronisierungseinrichtung zeichnet sich durch besondere Einfachheit aus, obwohl die dabei verwendete Reibungskupplung mit einem hochwertigen Streusinter-Reibbelag ausgestattet sein kann, der unmittelbar auf der Reibfläche aufgesintert ist. Eine weitere Besonderheit ist, daß der einen eigenen Bauteil bildende Reibringkörper über den Kupplungskörper direkt mit dem Gangrad formschlüssig in Verbindung steht, wogegen bei den vergleichbaren bekannten Synchronisierungseinrichtungen mit einfacher Synchronisierung die formschlüssige Verbindung erst nach dem Einlegen bzw. Synchronisieren des jeweiligen Ganges über die Schiebemuffe erfolgt. Da der Kupplungskörper keine Reibfläche und auch keine mit einer Reibfläche zusammenwirkende Kupplungsfläche aufweist, ist er besonders einfach gestaltet und kann entsprechend preisgünstig hergestellt werden, wobei auch eine Materialersparnis erzielt wird. Außerdem kann der Reibringkörper im Bedarfsfall, z.B. bei Verschleiß oder Zerstörung der Reibfläche, einfach und billig ausgetauscht werden. Bei den vergleichbaren herkömmlichen Synchronisierungseinrichtungen muß in diesem Fall das Gangrad einschließlich Kupplungskörper und Reibkonus erneuert werden.

Bei einer bevorzugten Ausführung der Erfindung ist der Reibbelag ein Streusinter-Reibbelag. Im Rahmen der Erfindung sind aber auch Reibflächen mit anderen Belagsmaterialien möglich, z.B. Molybdänbeläge oder Beläge aus anderen aufgespritzten Werkstoffen.

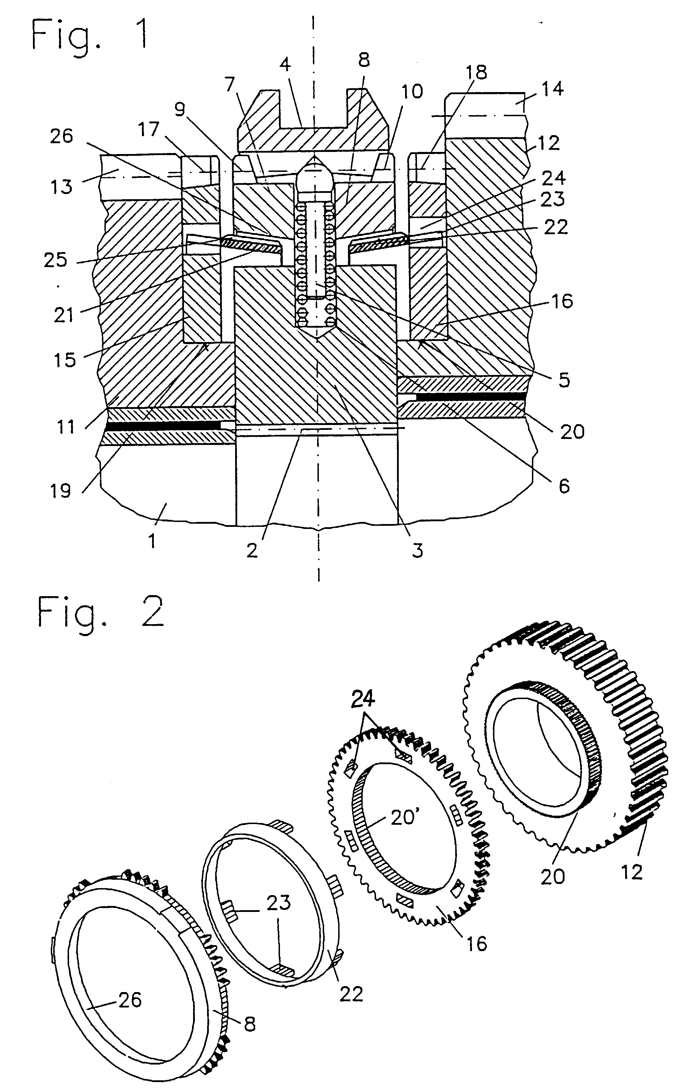

In der Zeichnung ist die Erfindung anhand eines schematisch dargestellten Ausführungsbeispiels erläutert. Fig. 1 zeigt eine erfindungsgemäße Synchronisierungseinrichtung im axialen Mittelschnitt durch die obere Hälfte und Fig. 2 die zur Synchronisierung dienenden Bestandteile in auseinandergezogener Darstellung.

Gemäß Fig. 1 besteht die Synchronisierungseinrichtung aus einem auf einer Getriebewelle 1 durch eine Verzahnung 2 drehfest angeordneten Synchronkörper 3. Dieser ist mit einer Schiebemuffe 4 versehen, in die ein nicht dargestellter Schalthebel eingreift und die mit einer aus einem Bolzen 5 und einer Feder 6 bestehenden Federsperre versehen ist. Auf den beiden Seiten des Synchronkörpers 3 ist je ein Synchronring 7 und 8 angeordnet, die mit einem formschlüssigen Mitnahmeelement, z.B. Verzahnung 9 und 10 versehen sind, in die die Schaltmuffe 4 eingreift.

Auf der Getriebewelle 1 sind zu beiden Seiten des Synchronkörpers 3 Gangräder 11 und 12 frei drehbar angeordnet, die je eine Verzahnung 13 und 14 aufweisen. Mit jedem Gangrad 11,12 ist ein ringförmiger Kupplungskörper 15 und 16 drehfest verbunden, die gleichfalls je mit einer Verzahnung 17 und 18 versehen sind, in die die Schaltmuffe 4 bei ihrer Verschiebung eingreifen kann. Die beiden Kupplungskörper 15,16 sitzen drehfest form- oder kraftschlüssig (z.B. Verzahnung, Laserschweißung usw.) auf je einem entsprechenden Absatz 19,20 der Gangräder 11 und 12.

Die beiden Kupplungskörper 15,16 stehen mit dem Synchronkörper 3 über je eine ein- und ausrückbare Reibungskupplung in Verbindung. Diese besteht aus je einem Reibringkörper 21,22, der einen eigenen Bauteil bildet und mit an seiner einen Seite vorragenden Mitnahmenocken 23 in dazupassende Ausnehmungen 24 des zugeordneten Kupplungskörpers 15,16 eingreift. Die Mitnahmenocken 23 können in der konischen Fläche des Reibringkörpers 21,22 geradlinig vorragen, wie in der Zeichnung gezeigt ist, sie können aber auch abgebogen sein, z.B. annähernd rechtwinkelig nach oben, wobei auch der umgebogene Abschnitt in die zugehörige Ausnehmung 24 des Kupplungskörpers 15,16 eingreift. An ihrer konischen Außenseite, die eine Reibfläche bildet, sind die Reibringkörper 21,22 mit einem aufgesinterten Reibbelag 25 versehen, der mit der konischen Kupplungsfläche 26 des zugehörigen Synchronringes 7,8 zusammenwirkt.

Aus Fig. 2, die die rechte Hälfte der Fig. 1 auseinandergezogen darstellt, ist zu erkennen, wie die einzelnen Bestandteile einer Reibungskupplung der Synchronisierungseinrichtung relativ zueinander und ineinander angeordnet sind. Das rechts dargestellte Gangrad 12, das auf der nicht dargestellten Getriebewelle 1 (Fig. 1) frei drehbar angeordnet ist, weist einen gegen den Kupplungskörper 16 vorspringenden Absatz 20 auf, auf den der Kupplungskörper 16 mit seiner dazupassenden Gegenfläche 20' drehfest aufgesetzt ist. Dadurch besteht eine dauernde form- und kraftschlüssige Verbindung zwischen dem Gangrad 12 und dem zugehörigen Kupplungskörper 16. In die Ausnehmungen 24 des Kupplungskörpers 16 ist der konische Reibringkörper 22 mit seinen Mitnahmenocken 23 formschlüssig eingesetzt, so daß auch zwischen diesen Teilen eine weitgehend spielfreie Drehverbindung besteht. Die mit einem Streusinter-Reibbelag 25 versehene konische Reibfläche des Reibringkörpers 22 ragt in die gleichfalls konische Kupplungsfläche 26 des Synchronringes 8 konzentrisch hinein und kommt mit dieser in Eingriff, sobald der Synchronring 8 mittels der Schiebemuffe 4 gegen den Reibringkörper 22 verschoben wird.

Gemäß Fig. 1 dreht sich der Synchronkörper 3 mit der Getriebewelle 1 mit, wogegen die beiden Gangräder 11 und 12 sich relativ zur Getriebewelle 1 und zum Synchronkörper 3 frei bewegen können. Wenn die Schiebemuffe 4 unter Überwindung der aus dem Bolzen 5 und der Feder 6 gebildeten Sperre gegen eines der Gangräder 11,12 verschoben wird, z.B. gegen das Gangrad 11, dann nimmt sie den Synchronring 7 mit, der nach kurzer Verschiebung mit seiner Kupplungsfläche 26 auf die mit dem Reibbelag 25 versehene Reibfläche des Reibringkörpers 21 auftrifft. Dadurch kommt es zu einer Anpassung der Drehzahl des Synchronringes 7 und des Gangrades 11, also zu einer Synchronisierung. Sobald die Drehzahlen übereinstimmen, kann die Schiebemuffe 4 in die Verzahnung 17 des Kupplungskörpers 15 eingreifen und so eine drehfeste Verbindung zwischen dem Synchronring 7 und dem Gangrad 11 herstellen. Die Verbindung zwischen dem Synchronkörper 3 und dem Gangrad 12 in der rechten Zeichnungshälfte erfolgt auf die gleiche Weise durch Verschieben der Schiebemuffe 4 nach rechts.

Aus der Zeichnung ist zu erkennen, daß die zum Bewirken der Synchronisierung vorgesehene Reibungskupplung recht einfach ist und praktisch nur aus dem mit einem Streusinter-Reibbelag 25 versehenen Reibringkörper 21 bzw. 22 als wesentlicher Bestandteil besteht. Insgesamt sind nur wenige Bestandteile erforderlich, die alle eine einfache Form besitzen, was auch für die Synchronringe 7,8 und insbesondere für die Kupplungskörper 15,16 gilt, die keine eigene Reib- oder Kupplungsfläche aufweisen. Die Kraftübertragung während der Synchronisierung erfolgt auf kurzem Weg, wobei der den Reibbelag tragende Reibringkörper 21,22 über den Kupplungskörper 15,16 mit dem Gangrad 11,12 direkt im Eingriff steht. Es handelt sich also um eine einfach herstellbare und vorteilhaft arbeitende Synchronisierungseinrichtung, die insbesondere für Schaltgetriebe von Kraftfahrzeugen besonders geeignet ist, wo sie eine leichtgängige Schaltung und eine lange Lebensdauer erwarten läßt.

## Patentansprüche

1. Synchronisierungseinrichtung für Schaltgetriebe, insbesondere von Kraftfahrzeugen, mit einem auf einer Getriebewelle (1) drehfest angeordneten Synchronkörper (3) mit einer Schiebemuffe (4) und wenigstens einem diesem zugeordneten, auf der Getriebewelle (1) drehbar gelagerten Gangrad (11,12), das mittels der Schiebemuffe (4) mit dem Synchronkörper (3) drehfest zusammenschaltbar ist und mit dem ein Kupplungskörper (15,16) formschlüssig verbunden ist, der mit dem Synchronkörper (3) über einen Synchronring (7,8), der mit einer konischen Kupplungsfläche (26) versehen ist, durch eine ein- und ausrückbare Reibungskupplung in Verbindung steht, die einen Reibringkörper (21,22) mit einer konischen Reibfläche (25) aufweist, wobei der Reibringkörper (21,22) mit Mitnahmenocken (23) versehen ist, die in Ausnehmungen (24) des Kupplungskörpers (15,16) eingreifen, dadurch gekennzeichnet, daß je Reibungskupplung nur ein einziger Reibringkörper (21,22) vorgesehen ist, der einen eigenständigen, selbsttragenden Bauteil bildet, nur an seiner konischen Außenfläche mit einem aufgesinterten Reibbelag (25) versehen ist und über diesen unmittelbar mit der konischen Kupplungsfläche (26) des Synchronringes (7,8) zusammenwirkt.

2. Einrichtung nach Anspruch 1, dadurch gekennzeichnet, daß der Reibbelag (25) ein Streusinterreibbelag ist.

## Claims

1. A synchronizing device for gear-shift transmissions, in particular of motor vehicles, with a synchronizing member (3) mounted rotationally fixed on a transmission shaft (1) and having a sliding sleeve (4) and at least one gearwheel (11, 12) which is associated with the said synchronizing member (3) and is mounted rotatably on the transmission shaft (1) and which can be connected to the synchronizing member (3) in a rotationally fixed manner by means of the sliding sleeve (4) and to which a coupling member (15, 16) is connected with positive locking, the coupling member (15, 16) being connected to the synchronizing member (3) by an engageable and disengageable friction coupling by way of a synchronizing ring (7, 8) provided with a conical coupling face (26), and the friction coupling having a friction-ring member (21, 22) with a conical friction face (25), wherein the friction-ring member (21, 22) is provided with entrainment cams (23) which engage in recesses (24) in the coupling member (15, 16), **characterized in that** only a single friction-ring member (21, 22) is provided *per* friction coupling, and the friction-ring member (21, 22) forms an independent self-supporting component, is provided with a sintered-on friction lining (25) only on its conical outer face and cooperates directly with the conical coupling face (26) of the synchronizing ring (7, 8) by way of the said friction lining (25).

2. A device according to Claim 1, **characterized in that** the friction lining (25) is a scattered-sinter friction lining.

## Revendications

1. Dispositif de synchronisation pour changements de vitesse, en particulier de véhicules automobiles, comprenant une pièce de synchronisation (3) calée sur un arbre porte-engrenages (1), un manchon coulissant (4) et au moins un pignon de vitesse (11, 12) coordonné à ce manchon, monté rotatif sur l'arbre porte-engrenages (1) et pouvant être solidarisé en rotation avec la pièce de synchronisation (3) au moyen du manchon coulissant (4), pignon qui est relié par crabotage à une pièce d'accouplement (15, 16), elle-même en liaison avec la pièce de synchronisation (3), par l'intermédiaire d'une bague baladeuse de synchronisation (7, 8) pourvue d'une surface conique d'accouplement (26), par un embrayage à friction engageable et désengageable, embrayage qui possède une pièce annulaire de friction (21, 22) ayant une surface frottante conique (25), la pièce annulaire de friction (21, 22) étant pourvue de taquets d'entraînement (23) pénétrant dans des ajours (24) de la pièce d'accouplement (15, 16), caractérisé en ce que, pour chaque embrayage à friction, on n'a prévu qu'une seule pièce annulaire de friction (21, 22), constituant une pièce à part, autoportante, dont seulement la surface extérieure conique est pourvue d'une garniture de friction (25) frittée sur elle et par laquelle elle coopère directement avec la surface conique d'accouplement (26) de la bague baladeuse de synchronisation (7, 8).

2. Dispositif selon la revendication 1, caractérisé en ce que la garniture de friction (25) est une garniture frittée dont la poudre constitutive a été appliquée par saupoudrage.
